# EUROPÄISCHE PATENTSCHRIFT

(11) **EP 0 433 586 B1**
(45) Veröffentlichungstag und Bekanntmachung des Hinweises auf die Patenterteilung: **28.07.1993**
(21) Anmeldenummer: 90119236.9
(22) Anmeldetag: 07.10.1990
(51) Int. Cl.: B23K 11/36

(54) **Absaugsystem für kühlmittelgekühlte Schweissvorrichtungen**
Extraction system for welding apparatuses using a cooling element
Système d'aspiration pour organes de soudage refroidis par un élément

(30) Priorität: 20.12.1989 DE 3942105
(43) Veröffentlichungstag der Anmeldung: 26.06.1991
(73) Patentinhaber: LIV AUTOMATION GMBH, D-51107 Köln (DE)
(72) Erfinder: Latzel, Peter H., W-5000 Köln 80 (DE); Kreiten, Ulrich, W-5100 Aachen/Verlautenheide (DE)
(74) Vertreter: Patentanwälte Dr. Solf & Zapf

(56) Entgegenhaltungen:
- DE-A- 3 316 868
- US-A- 4 536 635
- US-A- 4 942 281

## Beschreibung

Die vorliegende Erfindung betrifft ein Absaugsystem für kühlmittelgekühlte Schweißvorrichtungen, insbesondere wassergekühlte Punktschweißzangen, mit einer angeschlossenen Kühlmittelvorlaufleitung und einer angeschlossenen Kühlmittelrücklaufleitung, wobei innerhalb der Schweißvorrichtung der Vorlauf und der Rücklauf miteinander verbunden sind, sowie mit jeweils einen im Vorlauf und im Rücklauf angeordneten Absperrhahn und einer mit dem Vorlauf und dem Rücklauf verbundenen Absaugvorrichtung.

Bei wassergekühlten Punktschweißzangen ist es erforderlich, z.B. beim E-Kappen- und Armaturenwechsel die Wasserzuleitung und den Wasserrücklauf abzusperren. Hierbei tritt jedoch das Problem auf, daß beim Ausbau bzw. Auswechseln der Armaturenteile in der Schweißzange und in den hinter der Absperrung liegenden Leitungsabschnitten noch Restwasser vorhanden ist, das auslaufen kann. Um dieses zu vermeiden, ist es zum Beispiel aus DE-A1-3 316 868 bekannt, über mit dem Leitungssystem verbundene Pumpen das Restwasser in einen Tank abzusaugen. Dieses bekannte System ist aber aufgrund der vielen Einzelteile anfällig und sehr aufwendig. Zudem reagiert dieses System relativ träge zu Beginn der Absperrphase, da die Saugpumpen zunächst anlaufen müssen.

Der vorliegenden Erfindung liegt die Aufgabe zugrunde, ein Absaugsystem für Kühlmittel zu schaffen, das kompakt ist und aus wenigen Einzelteilen besteht und das ein schnelles und zuverlässiges Absaugen des Restkühlmittels gewährleistet.

Erfindungsgemäß wird dies dadurch erreicht, daß die Absaugvorrichtung aus einer mit der Vorlaufleitung zwischen dem Absperrhahn und der Schweißvorrichtung verbundenen Förder-Zylinderkolbeneinheit besteht, deren Kolben mittels einer angeschlossenen Antriebseinrichtung verfahrbar ist.

Durch diese erfindungsgemäße Ausgestaltung saugt die Förder-Zylinderkolbeneinheit das Restwasser ab und speichert es in ihrem Zylinderinnenraum. Demnach entfällt ein separater Aufnahmetank. Außerdem wird das abgesaugte Restwasser durch erneute Betätigung der Kolbenzylindereinheit vor der Wiederinbetriebnahme der Schweißvorrichtung zurück in das Kühlsystem gefördert, so daß kein Wasserverlust auftritt. Der große Vorteil der Erfindung liegt darin, daß das Absaugen des Restwassers praktisch verzögerungsfrei erfolgt, da der sofort im System entstehende Unterdruck jegliches Austreten von Restkühlmittel bzw. Restwasser verhindert.

Weitere vorteilhafte Ausführungen der Erfindung sind in den Unteransprüchen enthalten.

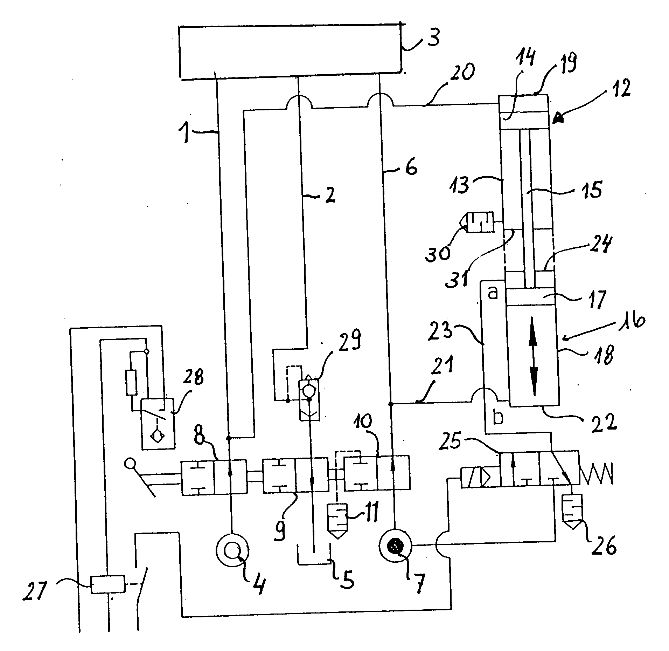

Anhand des in der beiliegenden Zeichnung, die eine Prinzipdarstellung der Erfindung beinhaltet, dargestellten Ausführungsbeispiels wird die Erfindung näher beschrieben.

Ein erfindungsgemäßes Absaugsystem besteht aus einer Vorlaufleitung 1 und einer Rücklaufleitung 2 für ein Kühlmedium, insbesondere Wasser. Die beiden Leitungen 1, 2 sind an eine Schweißvorrichtung 3 derart angeschlossen, daß sie in dieser enden und über ihre offenen Enden miteinander verbunden sind. Mit ihrem anderen Ende ist die Vorlaufleitung 1 an einem Wasserzulauf 4 und die Rücklaufleitung 2 an einem Wasserablauf 5, z.B. einem Tank, angeschlossen. Weiterhin ist eine Druckluftleitung 6 vorgesehen, die einendig an der Schweißvorrichtung 3 angeschlossen ist sowie anderendig an einem Druckluftanschluß 7. Anstelle von Druckluft kann auch ein anderes Druckmedium, insbesondere auch ein hydraulisches Druckmedium erfindungsgemäß Verwendung finden. In jeder der drei Leitungen 1, 2, 6 ist vor der Schweißvorrichtung 3 jeweils ein Absperrhahn 8, 9, 10 angeordnet. Vorzugsweise sind diese drei Absperrhähne 8, 9, 10, wie dargestellt, zu einer einzigen Absperrvorrichtung, insbesondere einem 3-fach Kugelhahn zusammengefaßt, so daß alle drei Leitungen 1, 2, 6 gleichzeitig geöffnet oder verschlossen werden können. In der Schließstellung des Absperrhahns 10 der Druckluftleitung 6 wird diese zur Schweißvorrichtung 3 hin über ein Ventil 11 belüftet. Weiterhin ist eine Förder-Kolbenzylindereinheit 12 vorhanden, die einen Zylinder 13 sowie einen in diesem verschiebbar geführten Kolben 14 umfaßt. Der Kolben 14 ist an einem Ende einer Kolbenstange 15 angeordnet. Am anderen Ende der Kolbenstange 15 ist diese mit einer Betätigungs-Kolbenzylindereinheit 16 verbunden, in dem vorteilhafterweise an der Kolbenstange 15 der Kolben 17 dieser Einheit 16 befestigt ist, der im Zylinder 18 der Einheit 16 geführt ist. Die Zylinder 13 und 18 sind vorzugsweise gleichachsig hintereinander angeordnet. Im Bereich des Bodens 19 des Zylinders 13 der Förder-Kolbenzylindereinheit 12 mündet eine Verbindungsleitung 20 zur Vorlaufleitung 1, wobei die Verbindungsleitung 20 zwischen der Schweißvorrichtung 3 und dem Absperrhahn 7 an die Vorlaufleitung 1 angeschlossen ist. Die Betätigungs-Kolbenzylindereinheit 18 ist an die Druckluftleitung 6 angeschlossen, und zwar über eine Versorgungsleitung 21, die an der Druckluftleitung zwischen der Schweißvorrichtung 3 und dem Absperrhahn 10 abgezweigt ist und im Bereich des Bodens 22 in dem Zylinder 18 der Betätigungs-Kolbenzylindereinheit 16 mündet. Weiterhin ist eine Druckluftanschlußleitung 23 an dem Zylinder 18 in dem Bereich des dem Boden 22 gegenüberliegenden Ende, das mit einem Deckel 24 verschlossen ist, angeschlossen, so daß der Kolben 17 beidseitig mit Druckluft alternativ beaufschlagbar ist. Die Druckluftanschlußleitung 23 ist über ein 3/2-Wegeventil 25 mit dem Druckluftanschluß 7 oder mit einem Entlüftungsventil 26 verbindbar. Das 3/2-Wegeventil ist elektromagnetisch betätigbar und wird über ein Elektrorelais 27 geschaltet, das über einen Näherungsschalter 28 aktiviert wird. Der Näherungsschalter 28 schaltet in Abhängigkeit von der Stellung des 3-fach Kugelhahns. Weiterhin ist in der Rücklaufleitung 2 ein Schnellbe- bzw. entlüftungsventil 29 angeordnet. Weiterhin ist ein Entlüftungsventil 30 an den Zylinder 13 der Förder-Kolbenzylindereinheit 12 im Bereich des Deckels 31 des Zylinders 13 vorgesehen.

Der Deckel 31 der Förder-Kolben-Zylindereinheit und der Deckel 24 der Betätigungs-Kolben-Zylindereinheit 16 können insbesondere zu einem Teil zusammgefaßt sein. Ebenso ist es zweckmäßig, wenn der Zylinder 18 der Betätigungs-Kolben-Zylindereinheit einen kleineren Durchmesser besitzt als der Zylinder 13 der Förder-Kolben-Zylindereinheit 12.

Die Funktionsweise des erfindungsgemäßen Absaugsystems ist wie folgt:

Soll an der Schweißvorrichtung 3 eine Auswechslung vorgenommen werden, werden mit dem 3-fach Kugelhahn die Absperrhähne 8, 9, 10 für die Vorlaufleitung 1, die Rücklaufleitung 2 und die Druckluftleitung 3 abgesperrt. Hierdurch wird der Näherungsschalter 28 geschlossen und das Relais 27 aktiviert, wodurch das 3/2-Wegeventil 25 die Druckluftanschlußleitung 23 mit dem Druckluftanschluß 7 verbindet. Hierdurch wird der Kolben 17 von oben mit Druck beaufschlagt und wird in Richtung auf den Boden 22 bewegt. Dies hat zufolge, daß gleichzeitig der Kolben 14 der Förder-Kolbenzylindereinheit 12 in dieselbe Richtung bewegt wird, wodurch im Zylinder 13 ein Unterdruck erzeugt wird, so daß über die Verbindungsleitung 20 in der Vorlaufleitung 1, der Schweißvorrichtung 3 und der Rücklaufleitung 2 befindliches Restkühlmittel, insbesondere Restwasser in den Zylinder 13 gesaugt wird. Während dieses Saughubes wird der Zylinder 13 über das Entlüftungsventil 30 entlüftet. Nach Beendigung des Auswechselvorgangs an der Schweißvorrichtung wird nunmehr der Kugelhahn derart bewegt, daß die Absperrventile 8, 9, 10 geöffnet werden, hierdurch erfolgt wiederum eine Betätigung des 3/2-Wegeventils durch das Zusammenwirken des Näherungsschalters 28 und des Relais 27, so daß das 3/2-Wegeventil in die Ausgangsstellung zurückgeht, wobei die Druckluftanschlußleitung 23 über das Ventil 26 belüftet wird, so daß nunmehr der Kolben 17 über die Versorgungsleitung 21 derart mit Druck beaufschlagt wird, daß er in Richtung auf den Deckel 24 bewegt wird. Hierdurch wird der Kolben 14 der Förder-Zylinderkolbeneinheit 12 in Richtung auf den Boden 19 bewegt, wodurch das im Zylinderinnenraum des Zylinders 13 befindliche Restkühlmittel, insbesondere Restkühlwasser während diesem Förderhubs über die Verbindungsleitung 20 in die Vorlaufleitung 1 zurückgefördert wird. Somit gelangt das gesamte Restwasser in den Kühlkreislauf zurück.

## Patentansprüche

1. Absaugsystem für kühlmittelgekühlte Schweißvorrichtungen (3), insbesondere wassergekühlte Punktschweißzangen, mit einer angeschlossenen Vorlaufleitung (1) und einer angeschlossenen Rücklaufleitung (2), wobei innerhalb der Schweißvorrichtung (3) der Vorlauf und der Rücklauf miteinander verbunden sind sowie jeweils einem im Vorlauf und im Rücklauf angeordneten Absperrhahn (8,9) als auch einer mit dem Vorlauf und dem Rücklauf verbundenen Absaugvorrichtung,
**dadurch gekennzeichnet**, daß die Absaugvorrichtung aus einer mit der Vorlaufleitung (1) zwischen dem Absperrhahn (8) und der Schweißvorrichtung (3) verbundenen Förder-Zylinderkolbeneinheit (12) besteht, deren Kolben (14) mittels einer angeschlossenen Antriebseinrichtung (16) verfahrbar ist.

2. Absaugsystem nach Anspruch 1,
**dadurch gekennzeichnet**, daß die Antriebseinrichtung aus einer pneumatischen oder hydraulischen Zylinder-Kolbeneinheit (16) besteht.

3. Absaugsystem nach Anspruch 1 oder 2,
**dadurch gekennzeichnet**, daß der Kolben (14) der Zylinder-Kolbeneinheit (12) und der Kolben (17) der Zylinder-Kolbeneinheit (16) an einer gemeinsamen Kolbenstange (15) jeweils endseitig befestigt sind.

4. Absaugsystem nach einem der Ansprüche 1 bis 3,
**dadurch gekennzeichnet**, daß die Zylinder (13, 18) der Zylinder-Kolbeneinheiten (12, 16) gleichachsig hintereinander angeordnet sind.

5. Absaugsystem nach einem der Ansprüche 1 bis 4,
**dadurch gekennzeichnet**, daß die Betätigungs-Zylinder-Kolbeneinheit (16) einen beidseitig druckbeaufschlagbaren Kolben (17) aufweist.

6. Absaugsystem nach einem der Ansprüche 1 bis 5,
**dadurch gekennzeichnet**, daß eine Versorgungsleitung (21) an eine Druckluftleitung (6) zwischen der Schweißvorrichtung (3) und einem in der Druckluftleitung (6) angeordneten Absperrhahn (10) angeschlossen ist und die Versorgungsleitung (21) im Bereich des Bodens (22) des Zylinders (18) der Betätigungs-Zylinder-Kolbeneinheit (16) angeschlossen ist.

7. Absaugsystem nach einem der Ansprüche 1 bis 6,
**dadurch gekennzeichnet**, daß eine Druckluftanschlußleitung (23) im Bereich des Deckels (24) des Zylinders (18) der Betätigungs-Zylinder-Kolbeneinheit (16) angeschlossen ist, die über ein 3/2-Wegeventil (25) mit dem Druckluftanschluß (7) oder einem Entlüftungsventil (26) verbunden ist.

8. Absaugsystem nach einem der Ansprüche 1 bis 7,
**dadurch gekennzeichnet**, daß an den Zylinder (13) der Förder-Zylinderkolbeneinheit (12) im Bereich des Deckel (31) ein Entlüftungsventil (30) angeordnet ist.

9. Absaugsystem nach einem Ansprüche 1 bis 8,
**dadurch gekennzeichnet**, daß die Absperrhähne (8, 9, 10) in der Vorlaufleitung (1), der Rücklaufleitung (2) und der Druckluftleitung (6) in einem gemeinsamen 3-fach Kugelhahn zusammengefaßt sind.

10. Absaugsystem nach einem der Ansprüche 1 bis 9,
**dadurch gekennzeichnet**, daß das 3/2-Wegeventil als elektromagnetisches Ventil ausgebildet ist und über ein Relais (27) betätigt wird, daß über einen mit dem 3-fach Kugelhahn zusammenwirkenden Näherungsschalter (28) aktivierbar ist.

11. Absaugsystem nach einem der Ansprüch 1 bis 10,
**dadurch gekennzeichnet**, daß der Absperrhahn (10) in der Druckluftleitung (6) derart ausgebildet ist, daß in der gesperrten Stellung die Druckluftleitung (6) mit einem Entlüftungsventil (11) verbunden ist.

12. Absaugsystem nach einem der Ansprüche 1 bis 11,
**dadurch gekennzeichnet**, daß in der Rücklaufleitung (2) ein Schnellbe- und entlüftungsventil (29) zwischen dem Absperrhahn (9) und der Schweißvorrichtung (3) angeordnet ist.

## Claims

1. Extraction system for coolant-cooled welding devices (3), in particular water-cooled spot-welding tongs, having a connected flow line (1) and a connected return line (2), the flow and the return being connected to each other within the welding device (3), and having respectively arranged in the flow and in the return a shut-off cock (8, 9) and also having an extraction device connected to the flow and the return, characterised in that the extraction device comprises a delivery cylinder-piston unit (12), which is connected to the flow line (1) between the shut-off cock (8) and the welding device (3) and the piston (14) of which can be moved by means of a connected drive mechanism (16).

2. Extraction system according to Claim 1, characterised in that the drive mechanism comprises a pneumatic or hydraulic cylinder-piston unit (16).

3. Extraction system according to Claim 1 or 2, characterised in that the piston (14) of the cylinder-piston unit (12) and the piston (17) of the cylinder-piston unit (16) are respectively fastened at the ends on a common piston rod (15).

4. Extraction system according to one of Claims 1 to 3, characterised in that the cylinders (13, 18) of the cylinder-piston units (12, 16) are arranged coaxially one behind the other.

5. Extraction system according to one of Claims 1 to 4, characterised in that the actuation cylinder-piston unit (16) has a piston (17) to which pressure can be applied on both sides.

6. Extraction system according to one of Claims 1 to 5, characterised in that a supply line (21) is connected to a compressed-air line (6) between the welding device (6) and a shut-off cock (10), arranged in the compressed-air line (6), and the supply line (21) is connected in the region of the bottom (22) of the cylinder (18) of the actuation cylinder-piston unit (16).

7. Extraction system according to one of Claims 1 to 6, characterised in that a compressed-air connection line (23) is connected in the region of the top (24) of the cylinder (18) of the actuation cylinder-piston unit (16) and is connected via a 3/2-way valve (25) to the compressed-air connection (7) or a venting valve (26).

8. Extraction system according to one of Claims 1 to 7, characterised in that a venting valve (30) is arranged on the cylinder (13) of the delivery cylinder-piston unit (12) in the region of the top (31).

9. Extraction system according to one of Claims 1 to 8, characterised in that the shut-off cocks (8, 9, 10) in the flow line (1), the return line (2) and the compressed-air line (6) are combined in a common triple ball cock.

10. Extraction system according to one of Claims 1 to 9, characterised in that the 3/2-way valve is designed as an electromagnetic valve and is operated by means of a relay (27), which can be activated by means of a proximity switch (28) interacting with the triple ball cock.

11. Extraction system according to one of Claims 1 to 10, characterised in that the shut-off cock (10) in the compressed-air line (6) is designed in such a way that, in the shut-off position, the compressed-air line (6) is connected to a venting valve (11).

12. Extraction system according to one of Claims 1 to 11, characterised in that a quick aerating and venting valve (29) is arranged on the return line (2) between the shut-off cock (9) and the welding device (3).

## Revendications

1. Système d'aspiration pour dispositifs de soudage (3) refroidis par un agent de refroidissement, en particulier pour porte-électrodes de soudage par points refroidis par eau, comportant une canalisation d'entrée (1) et une canalisation de sortie (2), l'entrée et la sortie étant reliées entre elles à l'intérieur du dispositif de soudage (3), ainsi qu'un robinet d'arrêt (8, 9) respectivement disposé dans la canalisation d'entrée et la canalisation de sortie et un dispositif d'aspiration, raccordé à ces dernières,
caractérisé par le fait que le dispositif d'aspiration consiste en un ensemble de circulation à cylindre et piston (12) raccordé entre le robinet d'arrêt (8) et le dispositif de soudage (3) dont le piston (14) peut être déplacé au moyen d'un dispositif d'entraînement (16).

2. Système d'aspiration selon la revendication 1,
caractérisé par le fait que le dispositif d'entraînement consiste en un ensemble à cylindre et piston (16) pneumatique ou hydraulique.

3. Système d'aspiration selon la revendication 1 ou 2,
caractérisé par le fait que le piston (14) de l'ensemble à cylindre et piston (12) et le piston (17) de l'ensemble à cylindre et piston (16) sont respectivement fixés aux extrémités d'une tige commune (15).

4. Système d'aspiration selon l'une des revendications 1 à 3,
caractérisé par le fait que les cylindres (13, 18) des ensembles à cylindres et pistons (12, 16) sont disposés l'un derrière l'autre selon le'même axe.

5. Système d'aspiration selon l'une des revendications 1 à 4,
caractérisé par le fait que l'ensemble d'actionnement à cylindre et piston (16) comporte un piston (17) pouvant être soumis à une pression sur les deux côtés.

6. Système d'aspiration selon l'une des revendications 1 à 5,
caractérisé par le' fait qu'une canalisation d'alimentation (21) est raccordée à une conduite d'air comprimé (6) entre le dispositif de soudage (3) et un robinet d'arrêt (10) disposé dans ladite conduite (6) et que la canalisation d'alimentation (21) est raccordée dans la région du fond (22) du cylindre (18) de l'ensemble à cylindre et piston (16).

7. Système d'aspiration selon l'une des revendications 1 à 6,
caractérisé par le fait qu'une conduite d'alimentation en air comprimé (23) est raccordée dans la région du capot (24) du cylindre (18) de l'ensemble à cylindre et piston (16), cette conduite étant reliée par un distributeur 3/2 voies (25) à l'alimentation en air comprimé (7) ou à une soupape d'évacuation de l'air (26).

8. Système d'aspiration selon l'une des revendications 1 à 7,
caractérisé par le fait qu'une soupape d'évacuation de l'air (30) est disposée sur le cylindre (13) de l'ensemble à cylindre et piston (12) dans la région du capot (31).

9. Système d'aspiration selon l'une des revendications 1 à 8,
caractérisé par le fait que les robinets d'arrêt (8, 9, 10) des canalisations d'entrée (1), de sortie (2) et d'air comprimé (6) sont regroupés en un robinet à boisseau sphérique triple.

10. Système d'aspiration selon l'une des revendications 1 à 9,
caractérisé par le fait que le distributeur 3/2 voies a la forme d'une soupape électromagnétique et est actionné au moyen d'un relais (27) qui peut être commandé par un interrupteur de proximité (28) coopérant avec le robinet à boisseau sphérique triple.

11. Système d'aspiration selon l'une des revendications 1 à 10,
caractérisé par le fait que le robinet d'arrêt (10) de la canalisation d'air comprimé (6) a une forme telle que, dans la position d'arrêt, la canalisation d'air comprimé (6) soit reliée à une soupape d'évacuation de l'air (11).

12. Système d'aspiration selon l'une des revendications 1 à 11,
caractérisé par le fait qu'une soupape d'aération et d'évacuation rapide (29) est disposée dans la canalisation de sortie (2) entre le robinet d'arrêt (9) et le dispositif de soudage (3).
